(19) Europäisches Patentamt
European Patent Office
Office européen des brevets

(11) **EP 2 840 745 B1**

(12) **EUROPEAN PATENT SPECIFICATION**

(45) Date of publication and mention
of the grant of the patent:
**11.10.2017   Bulletin 2017/41**

(51) Int Cl.:
***H04L 25/02*** *(2006.01)*

(21) Application number: **13181377.6**

(22) Date of filing: **22.08.2013**

(54) **METHOD AND APPARATUS FOR CHANNEL ESTIMATION USING AN ADAPTIVE WINDOWING APPROACH**

VERFAHREN UND VORRICHTUNG ZUR KANALSCHÄTZUNG UNTER VERWENDUNG EINER ADAPTIVEN FENSTERANZEIGE

PROCÉDÉ ET APPAREIL D'ESTIMATION DE CANAL À L'AIDE D'UNE APPROCHE DE FENÊTRAGE ADAPTATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.02.2015   Bulletin 2015/09**

(73) Proprietor: **CommAgility Limited**
**Holywell Park**
**Loughborough LE11 3AQ (GB)**

(72) Inventor: **Goldyrjew, Sergeij**
**85080 Gaimersheim (DE)**

(74) Representative: **Eisenführ Speiser**
**Patentanwälte Rechtsanwälte PartGmbB**
**Postfach 31 02 60**
**80102 München (DE)**

(56) References cited:
**EP-A1- 1 860 810        US-A1- 2008 101 216**
**US-A1- 2010 197 264**

• **J. ROBERT, J. ZOELLNER, M. SLIMANI: "Adaptive Windowing for OFDM with DenseSubcarrier Spacing in Mobile Channels", OFDM 2012, 17TH INTERNATIONAL OFDM WORKSHOP 2012 (INOWO'12); PROCEEDINGS OF, 29 August 2012 (2012-08-29), - 30 August 2012 (2012-08-30), pages 1-6, XP002718721, Essen, Germany**
• **YONGMING LIANG ET AL: "Channel Estimation Using Adaptive Filters in MIMO-OFDM Systems", WIRELESS COMMUNICATIONS, NETWORKING AND MOBILE COMPUTING, 2006. WICOM 2006. INTERNATIONAL CONFERENCE ON, IEEE, PI, 1 September 2006 (2006-09-01), pages 1-4, XP031074206, ISBN: 978-1-4244-0517-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method, apparatus and computer program product for performing channel estimation in a receiver of a network system using channel equalization methods in frequency domain, such as for example cellular network systems according to the Long Term Evolution (LTE) standard.

BACKGROUND OF THE INVENTION

In fourth generation (4G) cellular systems and other recent wireless standards, high spectral efficiency and at the same time lower receiver complexity is needed to meet the requirements for the immense data throughputs. As an example, transmission methods based on orthogonal frequency division multiplexing (OFDM) have become the selected technology for several recent wireless standards, such as the IEEE standard for local and metropolitan area networks (better known as WiMAX), or LTE of the 3rd Generation Partnership Project (3GPP). In OFDM, the transmission bandwidth is divided into multiple narrow band subcarriers. Thus, lower complexity signal processing in frequency domain can be efficiently deployed.

Wireless communications systems have to cope with channels which exhibit varying characteristics in both time and frequency. The fluctuations in time are generally caused by movements of mobile stations. A signal propagating over different paths to the receiver causes variations in frequency. The signal components arrive at the receive antenna with different delays, amplitudes and phases. The multipath characteristic of a wireless channel is responsible for the frequency selectivity which severely affects the data transmission. Therefore, the use of an equalizer is indispensable to correctly decode the transmitted information.

The use of frequency domain channel equalization allows for a low complexity recovery of a disturbed signal. The performance of an equalizer is significantly influenced by the accuracy of channel estimates derived from the transmitted signal. For this purpose, communication systems transmit pilot symbols alongside user and control data.

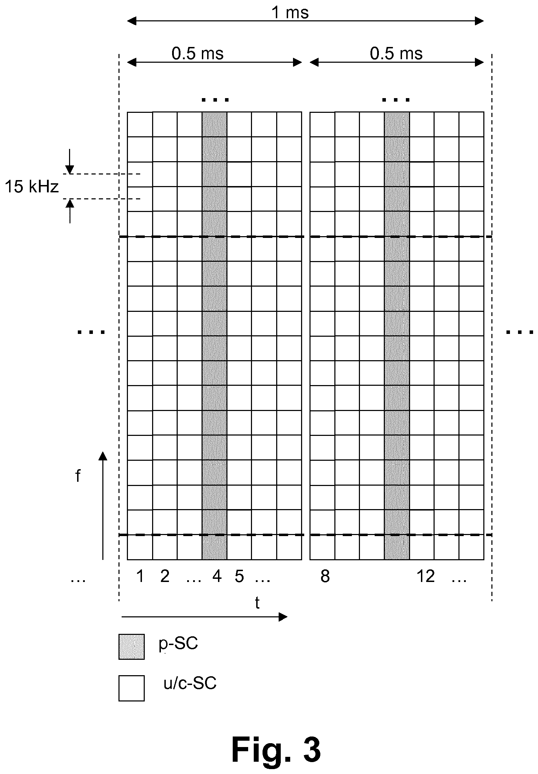

Fig. 3 shows an exemplary LTE frame structure used in the uplink (UL) as specified in TS 36.211, "Evolved Universal Radio Access (E-UTRA); Physical channels and modulation" in the 3rd Generation Partnership Project (3GPP). The channel estimation needs to be executed in both the frequency (f) and time (t) directions. In an optimal case, the estimation for these two directions is jointly executed as described for example in Hoeher, P. et al., "Two-Dimensional Pilot-Symbol-Aided Channel Estimation by Wiener Filtering," Proc. IEEE International Conference on Acoustics, Speech, and Signal Processing (ICASSP), Munich, Germany, Apr. 1997, pp. 1845-1848, resulting in a relatively high complexity. Therefore, practical systems usually separately estimate the channel coefficients, for example first in frequency and secondly in time directions. In Fig. 3, each square of the grid structure corresponds to a two-dimensional resource element (i.e., time and frequency domain), wherein white squares indicate user or control information subcarriers (u/c-SC) and grey squares indicate pilot sub-carriers (p-SC).

To obtain channel estimates as accurate as possible, the estimation procedure is usually divided into two steps. First, rough estimates are derived by dividing the received signal by the corresponding pilots on the subcarrier basis:

$$\hat{H}_k = R_k / P_k. \tag{1}$$

Thereby, $\hat{H}_k$ is a rough estimate of a channel coefficient at frequency tap or subcarrier $k$, $R_k$ is the received signal at the same subcarrier $k$, and $P_k$ stands for the corresponding pilot symbol also transmitted at the same subcarrier $k$ and known to the receiver. For $R_k$ the following is valid:

$$R_k = H_k P_k + N_k, \tag{2}$$

with $H_k$ as the true channel coefficient at subcarrier $k$. $N_k$ stands for the additive noise.

After having derived the above rough estimates, two different methods are broadly used in the second step to improve the channel estimation performance. The first approach uses the correlations between the neighboring sub-carriers and is often referred to as a Wiener estimator. In Schulze, H. and Lüders, C., "Theory and Applications of OFDM and CDMA Wideband Wireless Communications," John Wiley & Sons, 2005, a detailed explanation of the method is given. Although showing good performance, two of the drawbacks of this method are the need of accurate knowledge of the correlation matrices, which have to be derived from the received signal, and a matrix inversion which is in general a computationally complex procedure.

The second method, known as a windowing method, converts the channel frequency response calculated in equation (1) into the time domain by means of an Inverse Discrete Fourier Transform (IDFT) thus arriving at the channel impulse response. Afterwards, it is assumed that the real channel has a maximum delay spread not exceeding a certain value. All components beyond this limit are considered to originate from the noise and are therefore set to zero. Finally, the modified impulse response is converted back into the frequency domain by the use of a Discrete Fourier Transform (DFT). This procedure should provide a better estimation than in equation (1), since noise components will be suppressed. A detailed description of one of the algorithm variants based on this windowing approach can be found in Li, Y. and Stüber, G., "Orthogonal Frequency Division Multiplexing for Wireless Communications," Springer, 2006. In general, the windowing approach relies on some assumptions which might be incorrect and thus affect the channel estimator performance. So, a badly dimensioned delay spread might ignore important channel taps if it is too short. On the other hand, assuming too large spreads unnecessarily increases the noisy content in a signal. Therefore, as a rule additional parameters such as maximum delay spread and noise power have to be estimated to better differentiate between the components belonging to the channel impulse response and those originating from noise.

Besides the abovementioned disadvantages of the windowing method, there are some other drawbacks that are inherent to communications systems. While the demand for wireless services has increased over the last years the wireless spectrum is fixed. Therefore, modern wireless communications systems are limited in their bandwidth. Furthermore, a particular user usually occupies only a fraction of the total system bandwidth. This limitation, along with IDFT and related phenomenon such as the leakage effect, results, after converting the roughly estimated frequency response into the time domain, in components appearing which are beyond the maximum excess delay of the original channel impulse response, as explained in X. Hou, Z. Zhang, and H. Kayama, "DMRS Design and Channel Estimation for LTE-Advanced MIMO Uplink," Vehicular Technology Conference Fall (VTC 2009-Fall), 2009 IEEE 70th, Sep. 2009.

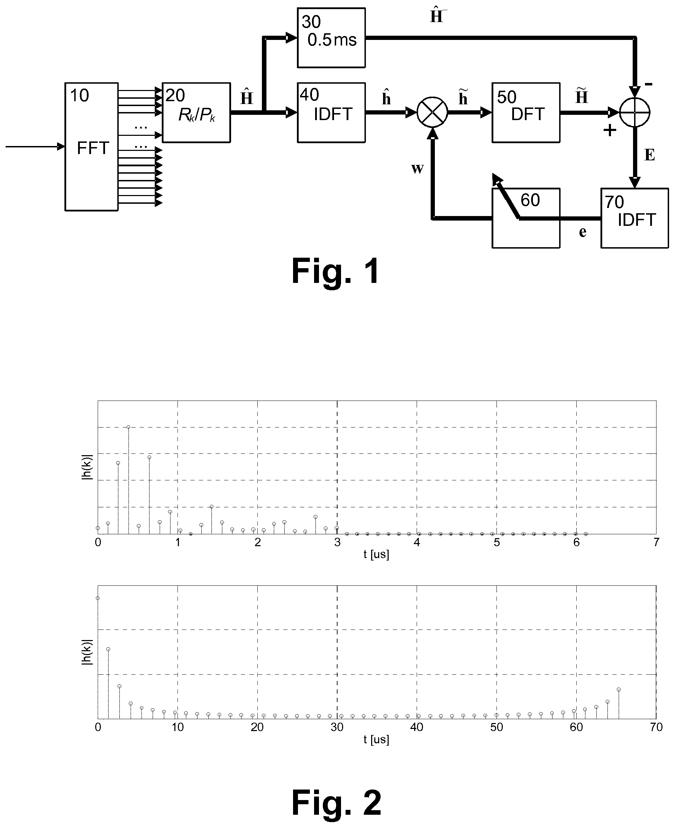

The leakage effect is exemplified in Fig. 2. At the top of Fig. 2 the original channel impulse response sampled at a sampling frequency of 7.68 MHz is presented. Then, the channel taps are converted into the frequency domain using a DFT length of 512. Finally, assuming that user's bandwidth is limited to only 48 consecutive subcarriers, the corresponding bandwidth fraction is converted back into the time domain by the use of the IDFT with a length of 48 resulting in an impulse response for the mentioned user at the bottom of Fig. 2. Whereas the original channel does not exceed 3 $\mu$s the energy of the user's channel response is spread over the total time interval of about 66 $\mu$s due to this bandwidth limitation. A subcarrier spacing of 15 kHz has been used according to the LTE standard. Altogether, the parameters chosen in this example correspond to those used in LTE systems with a system bandwidth of 5 MHz. The energy leak further complicates the use of the windowing method since channel taps which exceed the maximum delay spread of the original channel response must also be taken into account.

Consequently, the use of a Wiener estimator provides good results but the derivation of the correlation matrices might become an issue when resorting to this approach. The windowing method is on its part simple but is often insufficient in its performance. Therefore, whenever higher estimation accuracy is critical it has been recommended to deploy a Wiener based approach instead of converting the rough channel estimates into the time domain, windowing them and then converting the results back into the frequency domain. However, in some cases it might be required to fall back on latter method. Especially, when complexity is an issue or when the same resources are allocated to multiple users as can happen in LTE systems. Applying different cyclic shifts to the pilot signals of each of the users makes it possible to separate the corresponding channel impulse responses in time domain as detailed in Sesia, S. et al., "LTE - The UMTS Long Term Evolution: From Theory to Practice," John Wiley & Sons, Second Edition, 2011, pp. 330-332. Therefore, an improvement of the windowing approach is of utmost interest.

In Robert, J. et al., "Adaptive Windowing for OFDM with Dense Subcarrier Spacing in Mobile Channels," International OFDM Workshop (INOWO), Essen, Germany, Aug. 2012, an algorithm for adaptive windowing for OFDM with dense subcarrier spacing is presented. Instead of using a rectangular DFFT window a shaped window is employed. The algorithm has been implemented in a software-based DVB-T2 receiver. The receiver consciously adapts the shaping window in order to reach the best compromise between Inter Symbol and Inter Carrier Interference in highly mobile channels. Document YONGMING LIANG ET AL: "Channel Estimation Using Adaptive Filters in MIMO-OFDM Systems", WIRELESS COMMUNICATIONS, NETWORKING AND MOBILE COMPUTING, 2006. WICOM 2006.INTERNATIONAL CONFERENCE ON, IEEE, PI, 1 September 2006 (2006-09-01), pages 1-4, ISBN: 978-1-4244-0517-6 discloses a channel estimation method with an adaptive filter.

SUMMARY OF THE INVENTION

It is an object of the present invention to provide an improved windowing approach for channel estimation.

This object is achieved by a method as claimed in claim 1, an apparatus as claimed in claim 8, and a computer program product as claimed in claim 12.

Accordingly, a roughly estimated channel frequency response is converted into the time domain to obtain a channel impulse response which is multiplied by a window function to suppress noise components and obtain an improved channel impulse response. Additionally, the roughly estimated channel frequency response is delayed by a time period which corresponds to a time gap between consecutive pilot reference signal transmissions, and coefficients of the window function are controlled based on a difference between the delayed channel frequency response and an improved channel frequency response obtained by converting the improved channel impulse response to the frequency domain.

Thus, based on the initially described estimation approach in frequency and time directions, the present invention concentrates on improving the accuracy of the first estimation, that is the channel estimation in frequency direction.

The proposed adaptive windowing approach provides low complexity and overcomes the initially mentioned drawbacks, since information about propagation channel conditions like the channel delay profile, leakage effect dimensions, and also noise power is not required. Signal-to-noise ratio (SNR) is considered on a channel tap basis. Thereby, the window function is adapted in the way that components which are significantly corrupted by the noise and affect the estimation accuracy are more strongly suppressed than those which are only marginally affected by noise.

In a specific LTE based implementation, subcarriers (e.g. OFDM subcarriers) bearing the pilot reference signals are usually used in a component-wise division for the rough channel estimation.

According to another example, component-wise multiplication of taps of the channel impulse response by the coefficients of said window function may be applied for windowing.

In a specific and non-limiting example, the coefficients of the window function may be controlled by deducting from the coefficients of the window function a real part of a parameter which is proportional to a component-wise multiplication of a conjugate-complex of the improved channel impulse response by a time-domain equivalent of said difference. In a more specific example, the parameter may be obtained by multiplying the result of said component-wise multiplication by a step size variable. Optionally, the step size variable may be independently calculated for each of the coefficients of the window function. As another option, the time-domain equivalent may be obtained by an inverse Fourier transform of the difference.

Certainly, other implementations of the control function for controlling the window coefficients may be used, where an analysis of the difference between the rough channel frequency response and the window-based improved channel frequency response determines an amount or degree or speed or other parameter of the control of the window coefficients.

The above features may be implemented as hardware circuits integrated on a single chip or chip set, or wired on a circuit board. As an alternative, at least parts of the features may be implemented as a software program or routine controlling a multi-tasking processor or computer device, e.g. a software-defined radio (SDR) implementation. As an example, the software program or routine may be implemented in C type programming language.

Other advantages, modifications are defined in the dependent claims.

BRIEF DESCRIPTION OF THE DRAWINGS

The invention will now be described in greater detail based on embodiments with reference to the accompanying drawings in which:

Fig. 1 shows a schematic functional block diagram of a channel estimation process or device with adaptive windowing according to a first embodiment;

Fig. 2 shows diagrams of a channel impulse response for explaining the leakage effect;

Fig. 3 shows an example of an LTE UL frame structure;

Fig. 4 shows a diagram with a non-adaptive window for a user bandwidth of 72 subcarriers;

Fig. 5 shows diagrams with windowing coefficient after adaptation to the channel conditions according to the embodiments;

Fig. 6 shows a typical learning curve of the adaptive procedure according to the embodiments;

Fig. 7 shows a diagram of MSE performances for different channel estimators and a user bandwidth of 72 subcarriers;

Fig. 8 shows a diagram with a non-adaptive window for a user bandwidth of 12 subcarriers;

Fig. 9 shows a diagram of MSE performances for different channel estimators and a user bandwidth of 12 subcarriers; and

Fig. 10 shows a schematic block diagram of a software-based implementation according to a second embodiment.

DESCRIPTION OF THE EMBODIMENTS

In the following, embodiments of the present invention will be described based on a channel estimation which may be applied in an UL LTE receiver device or in any other receiver device which receives a signal with similar frame structure.

Pilot based estimation methods are most commonly used methods which are applicable in systems where the sender or transmitter emits some known signal. Blind estimation, on the other hand, relies on some properties of the signal (e.g., cyclo-stationarity of the signal) and is not broadly used in practical OFDM systems. Adaptive channel estimation methods are typically used to cope with time-varying propagation conditions.

In a typical OFDM transmitter, binary data is mapped to a specific modulated symbols by the use of, for example, quadrature phase shift keying (QPSK) and the modulated data undergoes serial-to-parallel (S/P) conversion, forming a vector of ($N_0$ - $N_{pilot}$) symbols, where $N_0$ is the total number of occupied sub-carriers and $N_{pilot}$ is the number of pilot sub-carriers. $N_{pilot}$ known pilot symbols are then inserted into the modulated data, forming frequency-domain transmitted data. Inverse Fast Fourier transform (IFFT) is performed to generate a time-domain vector x(n) and a cyclic prefix is then pre-appended to x(n). In LTE a DFT based precoding on a user basis is applied for the uplink direction before the IFFT operation. After parallel-to-serial (P/S) conversion, digital-to-analog conversion and low-pass filtering, time-domain data is transmitted over a channel represented by its impulse response h(n).

At the receiver, the opposite set of operations is performed. After analog-to-digital conversion and low-pass filtering, the received signal goes through a serial-to-parallel conversion and is stored. Cyclic prefix is then removed and a received symbol vector r(n) is created. Fast Fourier Transform (FFT) is then applied to r(n), creating the received signal vector in the frequency domain. After estimating the channel coefficients relying on the pilot symbols, equalization is applied and the pilot symbols are removed from the equalized signal. The equalized data then undergoes a P/S conversion and demodulation, creating estimates of the transmitted binary data.

Fig. 1 shows a schematic functional block diagram of a low-complexity channel estimation process or device according to a first embodiment, which may be provided at a receiver in an OFDM based communications system. More specifically, the proposed channel estimation process or device automatically adapts the window coefficients to the current propagation channel conditions so as to reflect the propagation conditions as accurately as possible. Thereby, the performance of the windowing based channel estimation can be considerably improved.

As an example, the window coefficients may influence the channel taps depending on their particular SNR values. That is, heavily affected channel coefficients should be significantly suppressed whereas the window shouldn't have any impact on the taps that have relatively high SNRs.

According to Fig. 1, after converting the received signal into the frequency domain by means of an FFT in an FFT block 10 the multiplexed users are separated from each other for the subsequent processing steps. In LTE systems each user occupies a multiple of 12 subcarriers. The subcarriers bearing the pilot symbols are used in a rough estimation block 20 for rough channel estimation on the subcarrier basis according to the above equation (1), where k ranges from 0 to *K*-1. In this example K is the number of occupied subcarriers by a particular user. Combining *K* subcarriers (1) can be replaced by

$$\hat{\mathbf{H}} = \mathbf{R} \div \mathbf{P} \text{ ,} \qquad\qquad (3)$$

where the operator "$\div$" stands for the component-wise division and $\hat{\mathbf{H}} = [\hat{H}_0,...,\hat{H}_{K-1}]^T$, $\mathbf{R} = [R_0,...,R_{K-1}]^T$, and $\mathbf{P} = [P_0,...,P_{K-1}]^T$ are the initial channel estimation, received signal bearing the pilot symbols, and the pilot symbol vectors, respectively. Then, the output **H** of the rough estimation block 20 is further processed in two different paths. The first path merely delays the channel estimation vector in a delay block 30 by 0.5 ms which corresponds to the time gap between the consecutive pilot symbols transmissions. In the second path the initial channel estimates are converted in a first IDFT block 40 into the time domain by the use of an IDFT arriving at $\hat{\mathbf{h}} = [\hat{h}_0,...,\hat{h}_{K-1}]^T$. To improve the estimation, the output **h** of the first IDFT block 40 is element-wisely multiplied by a window $\mathbf{w} = [w_0,...,w_{K-1}]^T$ yielding

$$\widetilde{\mathbf{h}} = \hat{\mathbf{h}} \otimes \mathbf{w} \text{ ,} \qquad\qquad (4)$$

where the operator "$\otimes$" represents the component-wise multiplication.

Then, the result **h** is converted in a DFT block 50 into the frequency domain, thus generating the improved estimation vector $\tilde{\mathbf{H}} = [\tilde{H}_0,...,\tilde{H}_{K-1}]^T$ which on its part is utilized to calculate the error vector $\mathbf{E} = [E_0,...,E_{K-1}]^T$ according to

$$\mathbf{E} = \widetilde{\mathbf{H}} - \hat{\mathbf{H}}^- \text{ ,} \qquad\qquad (5)$$

where $\hat{\mathbf{H}}^-$ is the delayed initial channel estimate vector **H** as output from the delay block 30. The channel estimation **H** can then be used for further signal processing such as equalization.

Finally, the error vector **E** in the frequency domain is converted in a second IDFT block 70 to a vector **e** = $[e_0,...,e_{K-1}]^T$ in the time domain (i.e. a time-domain equivalent), which is further exploited in a window adaptation block 60 to adapt or control the window coefficients. This control may be achieved as follows:

$$\mathbf{w}^+ = \mathbf{w} - \mathrm{Re}\left\{ \mu \cdot \tilde{\mathbf{h}}^* \otimes \mathbf{e} \right\}, \tag{6}$$

where the vector $\mathbf{w}^+$ contains improved window coefficients for the next estimation loop. "Re{x}" represents the real part of x, whereas $x^*$ designates the conjugate-complex of x. A step size variable $\mu$ may be used to control how fast the algorithm converges to its optimum. On the other hand, a higher $\mu$ affects the accuracy and might cause instabilities. Furthermore, at the cost of higher complexity this parameter can be independently calculated for each component of the vector $\mathbf{w}^+$. The rule in equation **Fehler! Verweisquelle konnte nicht gefunden werden.** causes that the expectation value of the square of the absolute value of the relation in equation **Fehler! Verweisquelle konnte nicht gefunden werden.** iteratively approaches its minimum. In a broader sense, equation **Fehler! Verweisquelle konnte nicht gefunden werden.** can be seen as a substitution of $\tilde{\mathbf{H}} - \mathbf{H}$ where **H** stands for the real channel frequency response.

It is however noted that the present invention is not restricted to the specific window control functionality according to equation (6). Various other forms of control are available to the skilled person and can be implemented so as to achieve the desired dynamic adaptation of the window coefficients to the determined difference between the rough estimation and the improved window-based estimation.

In the following, the performance of the proposed adaptive channel estimation (aw) according to the present invention is benchmarked against the performance of conventional estimates (ie) as initially explained in connection with equation (3), the performance provided when applying a windowing approach (fw) with fixed coefficients, and results delivered when a Wiener channel estimator (We) is used. As propagation channel model the Extended Vehicular A (EVA) profile is taken as detailed in 3GPP TS 36.101, "Evolved Universal Radio Access (E-UTRA); User Equipment (UE) radio transmission and reception," and is summarized in the table below. A Doppler frequency of 10 Hz is assumed.

| EVA (Extended Vehicular A) $f_{Dmax}$ = 10 Hz (Jakes Dopp. Spread) | |
|---|---|
| Excess tap delay [ns] | Relative power [dB] |
| 0 | 0.0 |
| 30 | -1.5 |
| 150 | -1.4 |
| 310 | -3.6 |
| 370 | -0.6 |
| 710 | -9.1 |
| 1090 | -7.0 |
| 1730 | -12.0 |
| 2510 | -16.9 |

Two different scenarios are investigated. First, a user of interest occupies a bandwidth of 72 consecutive subcarriers. Second, 12 subcarriers are occupied only. To note is that in LTE it is the smallest possible bandwidth which can be allocated to a user. The total bandwidth of the system is equal to 5 MHz resulting in a FFT length of 512. The DFT/IDFT lengths are 72 and 12 for the first and second scenarios, respectively.

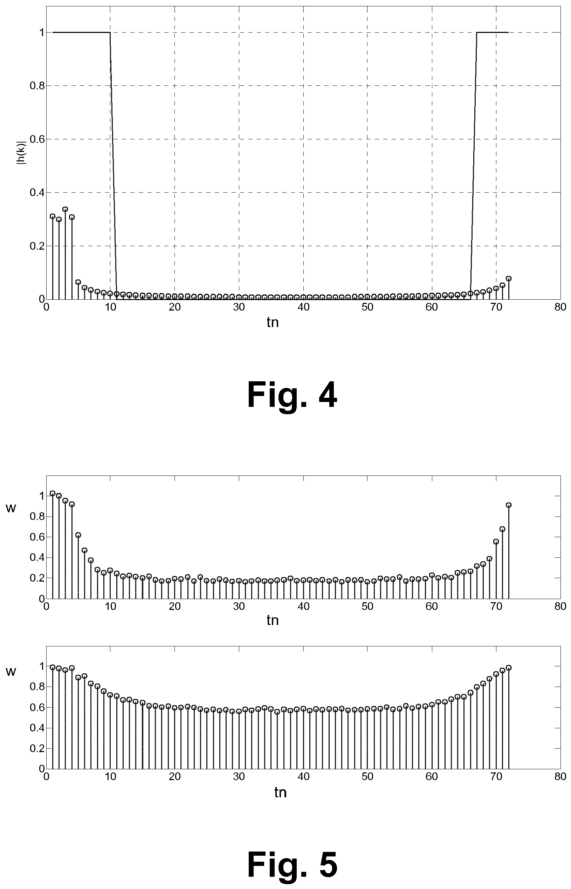

Fig. 4 illustrates the coefficients of the fixed windowing approach for the first scenario of a bandwidth of 72 subcarriers. As already mentioned, there is a tradeoff between the performance for the lower and higher SNR values. The more channel taps that are within the passband (coefficient values equal to one), the better the result for the higher SNR regions. In contrast, for a reasonable performance at lower SNRs, only high-energy channel taps should be taken into account. Simulations have shown that a window containing 16 coefficients with values of one, as depicted in Fig. 4, provides a good tradeoff.

The Wiener estimator is based on the method published in Li, Y. and Stüber, G., "Orthogonal Frequency Division Multiplexing for Wireless Communications," Springer, 2006. The estimation is executed on a basis of 12 neighboring initial channel estimates as follows:

$$
\begin{bmatrix} \breve{H}_k \\ \breve{H}_{k+1} \\ \vdots \\ \breve{H}_{k+11} \end{bmatrix} = \begin{bmatrix} b_{0,0} & b_{0,1} & \cdots & b_{0,11} \\ b_{1,0} & b_{1,1} & & b_{1,11} \\ \vdots & & \ddots & \vdots \\ b_{11,0} & b_{11,1} & & b_{11,11} \end{bmatrix} \cdot \begin{bmatrix} \hat{H}_k \\ \hat{H}_{k+1} \\ \vdots \\ \hat{H}_{k+11} \end{bmatrix}, \tag{7}
$$

where $\breve{H}_k$ is the Wiener channel estimate at the subcarrier $k$ and $b_{l,m}$ are the estimator coefficients. Once the channel at the initial 12 subcarriers ranging from $k$ to $k + 11$ has been estimated, the next 12 estimates are derived starting at position $k + 12$. This procedure is repeated until the channel estimates for the whole bandwidth allocated to a user are calculated.

Fig. 5 shows diagrams which illustrate the window filter coefficients (w) after adapting to the channel conditions according to the embodiments of the present invention. The top diagram relates to an SNR which is equal to 5 dB while the bottom diagram relates to an SNR which is equal to 15 dB. As expected, the channel taps with the lower SNR values are more strongly affected by the window coefficients. As the total SNR increases, the window impact on the channel taps decreases as can be concluded from Fig. 5 where the window coefficients for the SNRs of 5 dB at the top and 15 dB at the bottom are shown.

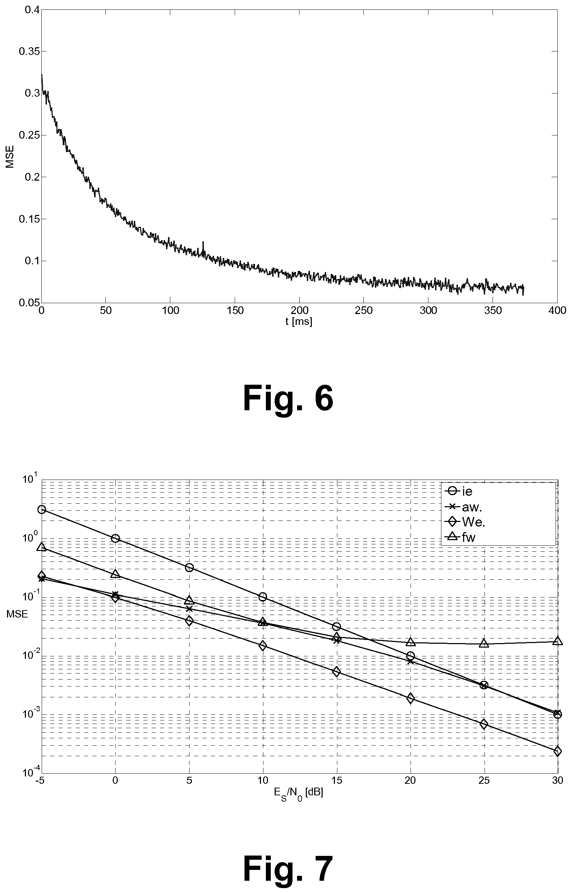

Fig. 6 shows a time-dependent diagram with a learning curve of the algorithm for an SNR of 5 dB and $\mu$ value of 1. All window coefficients are initialized by 1. Obviously, after 100 to 150 ms the adaptation almost approaches the minimum of the mean square error (MSE) calculated as

$$
\mathbf{MSE} = \frac{1}{K} \sum_{k=0}^{K-1} \left( H_k - \widetilde{H}_k \right) \left( H_k - \widetilde{H}_k \right)^*, \tag{8}
$$

where $H_k$ is the actual channel coefficient at the frequency subcarrier $k$. A larger $\mu$ will further accelerate the convergence at the cost of accuracy.

Fig. 7 shows the MSE performance curves for the above mentioned evaluated estimation methods for the first scenario of a bandwidth of 72 subcarriers in dependence on the energy per symbol to noise power spectral density ($E_S/N_0$) which is an SNR measure, also known as "SNR per symbol".

As can be gathered from Fig. 7 the windowing approach (fw) with fixed coefficients exhibits insufficient performance for the lower SNRs and error floor for the higher SNR regions. As expected, the Wiener estimator (We) shows the best results. The adaptive windowing method (aw) results in a curve that is quite close to the Wiener approach in the lower SNR regions and slowly approaches the initial estimates $\hat{H}_k$ for the higher SNRs. Usually, in modern communication systems less accurate channel estimation for the higher SNRs are not that critical since the whole signal processing chain including a channel coding might alleviate an insignificant estimator performance degradation. Therefore, starting from a certain SNR value even the initial estimation (ie) $\hat{H}_k$ could provide satisfactory results. For this reason, the performance degradation of the adaptive algorithm towards the higher SNRs is, in many cases, acceptable.

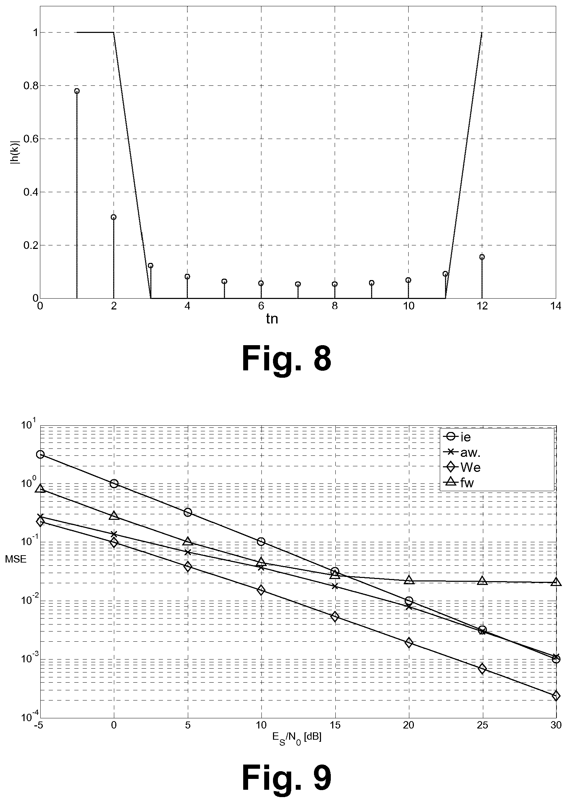

Fig. 8 shows diagrams which illustrate the window filter coefficients for the fixed windowing approach for the second scenario where only 12 subcarriers are occupied by a user.

Fig. 9 shows the MSE performance curves for the above mentioned evaluated estimation methods for the second scenario of only 12 subcarriers in dependence on the $E_S/N_0$ and reveals similar performance behavior of the different methods already known from the first scenario. Smaller bandwidths often impose higher demand on a channel estimator due to limited number of transmitted pilots and different effects such as higher leakage and declining estimation accuracy towards the bandwidth edges. Nevertheless, the proposed adaptive approach according to the present invention is able to cope with these conditions at the cost of only insignificant performance degradations.

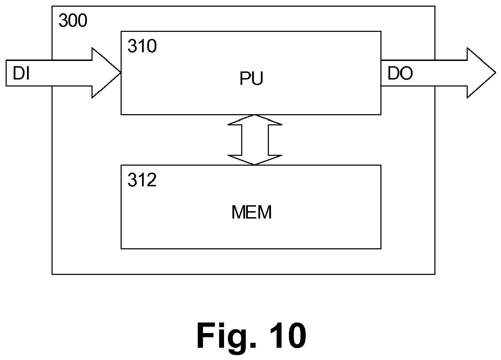

Fig. 10 shows a schematic block diagram of an alternative software-based implementation according to a second embodiment. The required functionalities can be implemented in a computer device 300 with a processing unit 310, which may be any processor or computer device supporting multi-tasking with a control unit which performs control based on software routines of a control program stored in a memory 312. The control program may also be stored separately on a computer-readable medium. Program code instructions are fetched from the memory 312 and are loaded to the control unit of the processing unit 310 in order to perform the functions of the blocks, steps or stages of Fig. 1, which may be implemented as the above mentioned software routines. The processing steps may be performed on the basis of input data DI and may generate output data DO. In the present interaction system, the input data DI may correspond to received signal (e.g. OFDM resource blocks), and the output data DO may correspond to the channel estimation $\bar{\mathbf{H}}$ or the adapted window coefficients $\mathbf{w}^{+}$.

Consequently, the functionalities of the above embodiments may be implemented as a computer program product comprising code means for generating each individual step of the proposed channel estimation when run on a computer device or data processor.

In summary, a method and apparatus for performing channel estimation in a wireless communication system have been described, wherein rough channel estimation is performed by dividing a received signal by corresponding pilot reference signals to obtain a channel frequency response. The obtained channel frequency response is then converted into the time domain to obtain a channel impulse response which is multiplied by a window function to suppress noise components and obtain an improved channel impulse response. Additionally, the roughly estimated channel frequency response is delayed by a time period which corresponds to a time gap between consecutive pilot reference signal transmissions, and coefficients of the window function are controlled based on a difference between the delayed channel frequency response and an improved channel frequency response obtained by converting the improved channel impulse response to the frequency domain.

It is apparent that the invention can be extended to other window control functions to achieve a desired adaptive behavior. Any software environment which may include a collection of hardware and software technologies where some or all of the operating functions are implemented through modifiable software or firmware operating on programmable processing technologies. Such devices include field programmable gate arrays (FPGAs), digital signal processors (DSPs), general purpose processors (GPPs), programmable System on Chip (SoC) or other application specific programmable processors. The use of these technologies allows new wireless features and capabilities to be added to existing radio systems without requiring new hardware. Moreover, the invention is not restricted to LTE systems and can be applied to any multi-channel communication system with pilot-based channel estimation. The embodiments may thus vary within the scope of the attached claims.

**Claims**

1. A method of performing channel estimation in a wireless communication system, said method comprising:

    a) performing rough channel estimation (20) by dividing a received signal by corresponding pilot reference signals to obtain a channel frequency response ($\hat{\mathbf{H}}$);
    b) converting (40) said obtained channel frequency response ($\hat{\mathbf{H}}$) into the time domain to obtain a channel impulse response ($\hat{\mathbf{h}}$);
    c) multiplying said channel impulse response ($\hat{\mathbf{h}}$) by a window function ($\mathbf{w}$) to suppress noise components and obtain an improved channel impulse response ($\tilde{\mathbf{h}}$);

    **characterized by**

    d) delaying (30) said obtained channel frequency response ($\hat{\mathbf{H}}$) by a time period which corresponds to a time gap between consecutive pilot reference signal transmissions; and
    e) controlling (60) coefficients ($\mathbf{w}$) of said window function based on a difference between said delayed channel frequency response ($\hat{\mathbf{H}}^{-}$) and an improved channel frequency response ($\tilde{\mathbf{H}}$) obtained by converting said improved channel impulse response ($\tilde{\mathbf{h}}$) to the frequency domain.

2. The method according to claim 1, further comprising using subcarriers bearing said pilot reference signals in a component-wise division for said rough channel estimation.

3. The method according to claim 1 or 2, further comprising applying component-wise multiplication of taps of said channel impulse response ($\hat{\mathbf{h}}$) by said coefficients ($\mathbf{w}$) of said window function.

4. The method according to any one of the preceding claims, wherein said coefficients ($\mathbf{w}$) of said window function are controlled by deducting from said coefficients ($\mathbf{w}$) of said window function a real part of a parameter which is proportional to a component-wise multiplication of a conjugate-complex of said improved channel impulse response ($\tilde{\mathbf{h}}$) by a time-domain equivalent of said difference.

5. The method according to claim 4, wherein said parameter is obtained by multiplying the result of said component-wise multiplication by a step size variable.

6. The method according to claim 5, further comprising independently calculating said step size variable for each of said coefficients (**w**) of said window function.

7. The method according to any one of claims 4 to 6, wherein said time-domain equivalent is obtained by an inverse Fourier transform of said difference.

8. An apparatus for performing channel estimation in a wireless communication system, said apparatus comprising:

a) estimation means (20) for performing rough channel estimation by dividing a received signal by corresponding pilot reference signals to obtain a channel frequency response ($\hat{H}$);
b) conversion means (40) for converting said obtained channel frequency response ($\hat{H}$) into the time domain to obtain a channel impulse response ($\hat{h}$);
c) multiplication means for multiplying said channel impulse response ($\hat{h}$) by a window function to suppress noise components and obtain an improved channel impulse response ($\tilde{h}$) and;
d) control means (60) for controlling coefficients (**w**) of said window function;

**characterized by**

e) delay means (30) for delaying said obtained channel frequency response ($\hat{H}$) by a time period which corresponds to a time gap between consecutive pilot reference signal transmissions;
f) wherein said control means (60) are adapted to control said coefficients of said window function based on a difference between said delayed channel frequency response ($\hat{H}^-$) and an improved channel frequency response ($\tilde{H}$) obtained by converting said improved channel impulse response ($\tilde{h}$) to the frequency domain.

9. The apparatus according to claim 8, wherein said control means (60) is adapted to control said coefficients (**w**) of said window function by deducting from said coefficients (**w**) of said window function a real part of a parameter which is proportional to a component-wise multiplication of a conjugate-complex of said improved channel impulse response ($\tilde{h}$) by a time-converted equivalent of said difference.

10. The apparatus according to claim 9, wherein said control means (60) is adapted to obtain said parameter by multiplying the result of said component-wise multiplication by a step size variable.

11. A receiver device comprising an apparatus according to any one of claims 8 to 10.

12. A computer program product comprising code means for producing the steps of any one of claims 1 to 7 when run on a computing device.

**Patentansprüche**

1. Verfahren zum Durchführen einer Kanalschätzung in einem drahtlosen Kommunikationssystem, wobei das Verfahren umfasst:

a) Durchführen einer groben Kanalschätzung (20) durch Dividieren eines empfangenen Signals durch korrespondierende Pilotreferenzsignale, um eine Kanalfrequenzantwort ($\hat{H}$) zu erhalten;
b) Konvertieren (40) der erhaltenen Kanalfrequenzantwort ($\hat{H}$) in den Zeitbereich, um eine Kanalimpulsantwort ($\hat{h}$) zu erhalten;
c) Multiplizieren der Kanalimpulsantwort ($\hat{h}$) mit einer Fensterfunktion (**w**), um Rauschkomponenten zu unterdrücken und um eine verbesserte Kanalimpulsantwort ($\tilde{h}$) zu erhalten;

**gekennzeichnet durch**:

d) Verzögern (30) der erhaltenen Kanalfrequenzantwort ($\hat{H}$) um eine Zeitperiode, die zu einem Zeitabstand zwischen aufeinanderfolgenden Pilotreferenzsignalübertragungen korrespondiert; und
e) Regulieren (60) von Koeffizienten (**w**) der Fensterfunktion basierend auf einer Differenz zwischen der verzögerten Kanalfrequenzantwort ($\hat{H}^-$) und einer verbesserten Kanalfrequenzantwort ($\tilde{H}$), die durch Konvertieren der verbesserten Kanalimpulsantwort ($\tilde{h}$) in den Frequenzbereich erhalten wurde.

**2.** Verfahren nach Anspruch 1, des Weiteren umfassend ein Verwenden von Unterträgern, die die Pilotreferenzsignale tragen, in einer komponentenweisen Division für die grobe Kanalschätzung.

**3.** Verfahren nach Anspruch 1 oder 2, des Weiteren umfassend ein Anwenden einer komponentenweisen Multiplikation von Taps der Kanalimpulsantwort ($\hat{h}$) mit den Koeffizienten (**w**) der Fensterfunktion.

**4.** Verfahren nach einem der vorangegangenen Ansprüche, wobei die Koeffizienten ( **w**) der Fensterfunktion reguliert werden durch Abziehen von den Koeffizienten (**w**) der Fensterfunktion eines Realteils eines Parameters, der proportional ist zu einer komponentenweisen Multiplikation einer Konjugiert-Komplexen der verbesserten Kanalimpulsantwort ($\tilde{h}$) mit einem Zeitbereichsäquivalent der Differenz.

**5.** Verfahren nach Anspruch 4, wobei der Parameter erhalten wird durch Multiplizieren des Ergebnisses der komponentenweisen Multiplikation mit einer Schrittgrößenvariablen.

**6.** Verfahren nach Anspruch 5, des Weiteren umfassend ein unabhängiges Berechnen der Schrittgrößenvariablen für jeden der Koeffizienten (**w**) der Fensterfunktion.

**7.** Verfahren nach einem der Ansprüche 4 bis 6, wobei das Zeitbereichsäquivalent durch eine inverse Fourier-Transformation der Differenz erhalten wird.

**8.** Vorrichtung zum Durchführen einer Kanalschätzung in einem drahtlosen Kommunikationssystem, wobei die Vorrichtung umfasst:

a) Schätzmittel (20) zum Durchführen einer groben Kanalschätzung (20) durch Dividieren eines empfangenen Signals durch korrespondierende Pilotreferenzsignale, um eine Kanalfrequenzantwort ($\hat{H}$) zu erhalten;
b) Konvertierungsmittel (40) zum Konvertieren der erhaltenen Kanalfrequenzantwort ($\hat{H}$) in den Zeitbereich, um eine Kanalimpulsantwort ($\hat{h}$) zu erhalten;
c) Multipliziermittel zum Multiplizieren der Kanalimpulsantwort ($\hat{h}$) mit einer Fensterfunktion, um Rauschkomponenten zu unterdrücken und um eine verbesserte Kanalimpulsantwort ($\tilde{h}$) zu erhalten;
d) Reguliermittel (60) zum Regulieren von Koeffizienten (**w**) der Fensterfunktion;

**gekennzeichnet durch**:

e) Verzögerungsmittel (30) zum Verzögern der erhaltenen Kanalfrequenzantwort ($\hat{H}$) um eine Zeitperiode, die zu einem Zeitabstand zwischen aufeinanderfolgenden Pilotreferenzsignalübertragungen korrespondiert;
f) wobei die Reguliermittel (60) angepasst sind, die Koeffizienten der Fensterfunktion basierend auf einer Differenz zwischen der verzögerten Kanalfrequenzantwort ($\hat{H}^-$) und einer verbesserten Kanalfrequenzantwort ($\tilde{H}$), die durch Konvertieren der verbesserten Kanalimpulsantwort ($\tilde{h}$) in dem Frequenzbereich erhalten wurde, zu regulieren.

**9.** Vorrichtung nach Anspruch 8, wobei die Reguliermittel (60) angepasst sind zum Regulieren der Koeffizienten (**w**) der Fensterfunktion durch Abziehen von den Koeffizienten (**w**) der Fensterfunktion eines Realteils eines Parameters, der proportional ist zu einer komponentenweisen Multiplikation einer Konjugiert-Komplexen der verbesserten Kanalimpulsantwort ($\tilde{h}$) mit einem zeitkonvertierten Äquivalent der Differenz.

**10.** Vorrichtung nach Anspruch 9, wobei das Kontrollmittel (60) angepasst ist, den Parameter durch Multiplizieren des Ergebnisses der komponentenweisen Multiplikation mit einer Schrittgrößenvariablen zu erhalten.

**11.** Empfängergerät, umfassend eine Vorrichtung nach einem der Ansprüche 8 bis 10.

**12.** Computerprogrammprodukt, umfassend Codiermittel zum Erzeugen der Schritte von einem der Ansprüche 1 bis 7, wenn diese auf einem Computergerät ausgeführt werden.

**Revendications**

**1.** Procédé de mise en oeuvre d'une estimation de canal dans un système de communication sans fil, ledit procédé comprenant:

a) effectuer une estimation de canal grossière (20) en divisant un signal reçu par des signaux de référence pilotes correspondants pour obtenir une réponse de fréquence de canal ($\hat{H}$);

b) convertir (40) ladite réponse de fréquence de canal obtenue ($\hat{H}$) dans le domaine temporel pour obtenir une réponse impulsionnelle de canal ($\hat{h}$);

c) multiplier ladite réponse impulsionnelle de canal ($\hat{h}$) par une fonction de fenêtre (**w**) pour supprimer des composants de bruit et pour obtenir une réponse impulsionnelle de canal améliorée ($\tilde{h}$);

**caractérisé par**:

d) retarder (30) ladite réponse de fréquence de canal obtenue ($\hat{H}$) d'une période de temps qui correspond à un intervalle de temps entre des transmissions consécutives de signaux de référence pilotes; et

e) commander (60) des coefficients (**w**) de ladite fonction de fenêtre sur la base d'une différence entre ladite réponse de fréquence de canal retardée ($\hat{H}^-$) et une réponse de fréquence de canal améliorée ($\tilde{H}$) obtenue en convertissant ladite réponse impulsionnelle de canal améliorée ($\tilde{h}$) dans le domaine de fréquence.

2. Procédé selon la revendication 1, comprenant en outre une utilisation de sous-porteuses portant lesdits signaux de référence pilotes, dans une division par composants pour ladite estimation de canal grossière.

3. Procédé selon la revendication 1 ou 2, comprenant en outre une application d'une multiplication par composants de taps de ladite réponse impulsionnelle de canal ($\hat{h}$) par lesdits coefficients (**w**) de ladite fonction de fenêtre.

4. Procédé selon l'une quelconque des revendications précédentes, dans lequel lesdits coefficients (**w**) de ladite fonction de fenêtre sont commandés en déduisant sur lesdits coefficients (**w**) de ladite fonction de fenêtre une partie réelle d'un paramètre qui est proportionnel à une multiplication par composants d'un nombre complexe conjugué de ladite réponse impulsionnelle de canal améliorée ($\tilde{h}$) par un équivalent de domaine temporel de ladite différence.

5. Procédé selon la revendication 4, dans lequel ledit paramètre est obtenu en multipliant le résultat de ladite multiplication par composants par une variable de taille de pas.

6. Procédé selon la revendication 5, comprenant en outre un calcul indépendant de ladite variable de taille de pas pour chacun desdits coefficients (**w**) de ladite fonction de fenêtre.

7. Procédé selon l'une quelconque des revendications 4 à 6, dans lequel l'équivalent de domaine temporel est obtenu par une transformée de Fourier inverse de la différence.

8. Dispositif de mise en oeuvre d'une estimation de canal dans un système de communication sans fil, ledit dispositif comprenant:

a) des moyens d'estimation (20) pour effectuer une estimation de canal grossière (20) en divisant un signal reçu par des signaux de référence pilotes correspondants pour obtenir une réponse de fréquence de canal ($\hat{H}$);

b) des moyens de conversion (40) pour convertir ladite réponse de fréquence de canal obtenue ($\hat{H}$) dans le domaine temporel pour obtenir une réponse impulsionnelle de canal ($\hat{h}$);

c) des moyens de multiplication pour multiplier ladite réponse impulsionnelle de canal ($\hat{h}$) par une fonction de fenêtre pour supprimer des composants de bruit et pour obtenir une réponse impulsionnelle de canal améliorée ($\tilde{h}$); et

d) des moyens de commande (60) pour commander des coefficients (**w**) de la fonction de fenêtre;

**caractérisé par**:

e) des moyens de retard (30) pour retarder ladite réponse de fréquence de canal obtenue ($\hat{H}$) d'une période de temps qui correspond à un intervalle de temps entre des transmissions consécutives de signaux de référence pilotes;

f) dans lequel les moyens de commande (60) sont adaptés pour commander les coefficients de ladite fonction de fenêtre sur la base d'une différence entre ladite réponse de fréquence de canal retardée ($\hat{H}^-$) et une réponse de fréquence de canal améliorée ($\tilde{H}$) obtenue en convertissant ladite réponse impulsionnelle de canal améliorée ($\tilde{h}$) dans le domaine de fréquence.

9. Dispositif selon la revendication 8, dans lequel ledit moyen de commande (60) est adapté pour commander lesdits coefficients (**w**) de ladite fonction de fenêtre en déduisant sur les coefficients (**w**) de ladite fonction de fenêtre une partie réelle d'un paramètre qui est proportionnel à une multiplication par composants d'un nombre complexe conjugué de ladite réponse impulsionnelle de canal améliorée ($\tilde{\mathbf{h}}$) par un équivalent converti en temps de ladite différence.

**10.** Dispositif selon la revendication 9, dans lequel le moyen de commande (60) est adapté pour obtenir ledit paramètre en multipliant le résultat de la multiplication par composants par une variable de taille de pas.

**11.** Dispositif récepteur comprenant un dispositif selon l'une quelconque des revendications 8 à 10.

**12.** Produit de programme informatique comprenant des moyens de codage pour produire les étapes selon l'une quelconque des revendications 1 à 7 lorsqu'il est exécuté sur un dispositif informatique.

Fig. 1

Fig. 2

Fig. 3

Fig. 4

Fig. 5

# Fig. 6

# Fig. 7

Fig. 8

Fig. 9

**Fig. 10**

**EP 2 840 745 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOEHER, P. et al.** Two-Dimensional Pilot-Symbol-Aided Channel Estimation by Wiener Filtering. *Proc. IEEE International Conference on Acoustics, Speech, and Signal Processing (ICASSP),* April 1997, 1845-1848
- **SCHULZE, H. ; LÜDERS, C.** Theory and Applications of OFDM and CDMA Wideband Wireless Communications. John Wiley & Sons, 2005
- **LI, Y. ; STÜBER, G.** Orthogonal Frequency Division Multiplexing for Wireless Communications. Springer, 2006
- DMRS Design and Channel Estimation for LTE-Advanced MIMO Uplink. **X. HOU ; Z. ZHANG ; H. KAYAMA.** Vehicular Technology Conference Fall (VTC 2009-Fall). IEEE, September 2009
- **SESIA, S. et al.** LTE - The UMTS Long Term Evolution: From Theory to Practice. John Wiley & Sons, 2011, 330-332
- **ROBERT, J. et al.** Adaptive Windowing for OFDM with Dense Subcarrier Spacing in Mobile Channels. International OFDM Workshop (INOWO), August 2012
- Channel Estimation Using Adaptive Filters in MIMO-OFDM Systems. **YONGMING LIANG et al.** WIRELESS COMMUNICATIONS, NETWORKING AND MOBILE COMPUTING, 2006. WICOM 2006. INTERNATIONAL CONFERENCE ON. IEEE, PI, 01 September 2006, 1-4